# EUROPÄISCHE PATENTSCHRIFT

(11) **EP 3 388 299 B1**
(45) Veröffentlichungstag und Bekanntmachung des Hinweises auf die Patenterteilung: **26.02.2020**
(21) Anmeldenummer: 18159111.6
(22) Anmeldetag: 28.02.2018
(51) Int. Cl.: B60T 8/40

(54) **BREMSSYSTEM FÜR EIN KRAFTFAHRZEUG SOWIE VERFAHREN ZUM BETREIBEN EINES BREMSSYSTEMS FÜR EIN KRAFTFAHRZEUG**
BRAKE SYSTEM FOR A MOTOR VEHICLE AND METHOD FOR OPERATING A BRAKE SYSTEM FOR A MOTOR VEHICLE
SYSTÈME DE FREINAGE POUR UN VÉHICULE AUTOMOBILE AINSI QUE PROCÉDÉ DE FONCTIONNEMENT D'UN SYSTÈME DE FREINAGE POUR UN VÉHICULE AUTOMOBILE

(30) Priorität: 11.04.2017 DE 102017206250
(43) Veröffentlichungstag der Anmeldung: 17.10.2018
(73) Patentinhaber: AUDI AG, 85045 Ingolstadt (DE)
(72) Erfinder: Brok, Tobias, 85092 Kösching (DE); Ernst, Herbert, 85055 Ingolstadt (DE)

(56) Entgegenhaltungen:
- WO-A1-00/68053
- WO-A1-97/38886
- WO-A1-97/41016
- DE-A1-102011 108 297
- DE-A1-102016 215 892

## Beschreibung

Die Erfindung betrifft ein Bremssystem für ein Kraftfahrzeug, das wenigstens eine erste Radbremse und wenigstens eine zweite Radbremse aufweist, wobei ein erstes Einlassventil einerseits an die erste Radbremse sowie andererseits an eine Bremsdruckquelle und ein zweites Einlassventil einerseits an die zweite Radbremse und andererseits an die Bremsdruckquelle strömungstechnisch angeschlossen ist, mit einem Schaltventil, das einen Fluidausgang des zweiten Einlassventils in einer ersten Schaltstellung mit der zweiten Radbremse und in einer zweiten Schaltstellung mit der ersten Radbremse strömungstechnisch verbindet. Die Erfindung betrifft weiterhin ein Verfahren zum Betreiben eines Bremssystems für ein Kraftfahrzeug.

Das Bremssystem dient dem Verzögern des Kraftfahrzeugs, insoweit also dem Bereitstellen einer auf Räder des Kraftfahrzeugs wirkenden Bremskraft. Die Bremskraft wird mithilfe der Radbremsen, also der ersten Radbremse und der zweiten Radbremse, auf die Räder aufgeprägt. Dabei ist die erste Radbremse zum Aufbringen der Bremskraft auf ein erstes der Räder und die zweite Radbremse zum Aufbringen der Bremskraft auf ein zweites der Räder vorgesehen. Verfügt das Kraftfahrzeug über mehr als zwei Räder, so weist das Bremssystem vorzugsweise für wenigstens eines der weiteren Räder oder alle der weiteren Räder jeweils eine zusätzliche Radbremse auf, mittels welcher auch auf das wenigstens eine weitere Rad die Bremskraft aufprägbar ist. Beispielsweise wird an den Radbremsen bei der Betätigung eines Bedienelements ein Istbremsdruck angelegt. Das Bremssystem liegt insoweit als Betriebsbremse des Kraftfahrzeugs vor oder bildet zumindest einen Bestandteil der Betriebsbremse.

Das Bremssystem verfügt beispielsweise über einen Hauptbremszylinder, in welchem ein Hauptbremskolben verlagerbar angeordnet ist. Der Hauptbremskolben begrenzt zusammen mit dem Hauptbremszylinder ein Bremsfluidvolumen, welches variabel ist, wobei seine Größe von der Stellung des Hauptbremskolbens abhängt. Der Hauptbremskolben ist mit einem Bedienelement gekoppelt, welches beispielsweise als Bremspedal vorliegt. Über das Bedienelement kann ein Fahrer des Kraftfahrzeugs eine gewünschte Bremskraft einstellen, welche nachfolgend als Vorgabebremskraft bezeichnet wird und vorzugsweise in festem Zusammenhang mit einem Vorgabebremsdruck steht.

Das Bremssystem liegt bevorzugt als elektrohydraulisches Bremssystem vor. Das bedeutet, dass in zumindest einer Betriebsart des Bremssystems das in dem Bremsfluidvolumen vorliegende Bremsfluid bei einer Betätigung des Bedienelements nicht unmittelbar den an der ersten Radbremse und/oder zweiten Radbremse anliegenden Istbremsdruck bereitstellt oder allenfalls einen Teil von diesem bereitstellt. Vielmehr ist es vorgesehen, bei der Betätigung des Bedienelements einen Sollbremsdruck zu ermitteln, wobei dies mithilfe wenigstens eines Sensors vorgesehen sein kann, welcher dem Bedienelement und/oder dem Hauptbremskolben und/oder dem Hauptbremszylinder und/oder einem Simulatorzylinder, in welchem ein Simulatorkolben verlagerbar angeordnet ist, zugeordnet ist.

Der Sensor kann beispielsweise als Wegsensor oder als Drucksensor ausgestaltet sein. In ersterem Fall wird mithilfe des Sensors die Betätigungsstrecke des Bedienelements ermittelt, um welche das Bedienelement bei seiner Betätigung verlagert wird. Zusätzlich oder alternativ kann selbstverständlich der in dem Hauptbremszylinder vorliegende Druck mittels des Sensors ermittelt werden. Aus den mithilfe des Sensors gemessenen Größen, also beispielsweise dem Weg und/oder dem Druck, wird anschließend der Sollbremsdruck ermittelt. Nachfolgend wird an der ersten Radbremse und/oder der zweiten Radbremse ein Istbremsdruck angelegt beziehungsweise eingestellt, welcher dem Sollbremsdruck entspricht.

Der Istbremsdruck wird dabei von der Bremsdruckquelle bereitgestellt, welche beispielsweise in Form einer Pumpe vorliegt, insbesondere einer elektrisch betriebenen Pumpe. In der vorstehend beschriebenen Betriebsart des Bremssystems ist insoweit das Bremsfluidvolumen nicht oder zumindest nicht unmittelbar mit der ersten Radbremse und/oder der zweiten Radbremse verbunden beziehungsweise strömungsverbunden. Um dennoch dem Fahrer des Kraftfahrzeugs bei der Betätigung des Bedienelements eine haptische Rückmeldung zu geben, ist dem Hauptbremszylinder bevorzugt ein - optionaler - Bremskraftsimulator zugeordnet. Dieser verfügt über den Simulatorkolben, welcher in einem Simulatorzylinder verlagerbar angeordnet ist und sich über ein Federelement an einer Wandung des Simulatorzylinders abstützt und insoweit federkraftbeaufschlagt ist.

Der Simulatorkolben begrenzt zusammen mit dem Simulatorzylinder ein Simulatorfluidvolumen, welches analog zu dem Bremsfluidvolumen variabel ist, wobei die Größe des Simulatorfluidvolumens von der Stellung des Simulatorkolbens abhängt. Das Simulatorfluidvolumen ist mit dem Bremsfluidvolumen strömungsverbunden. Bei einer Betätigung des Bedienelements wird das Bremsfluidvolumen verkleinert und in dem Bremsfluidvolumen vorliegendes Bremsfluid dem Simulatorfluidvolumen zugeführt. Entsprechend vergrößert sich das Simulatorfluidvolumen, wodurch der Simulatorkolben entgegen der Federkraft ausgelenkt wird.

In Abhängigkeit von der Federkraft, welche von der Auslenkung des Simulatorkolbens abhängen kann, wirkt in der beschriebenen Betriebsart aufgrund der Strömungsverbindung zwischen dem Simulatorfluidvolumen und dem Bremsfluidvolumen auf das Bedienelement eine Gegenkraft, welche einer von dem Fahrer des Kraftfahrzeugs auf das Bedienelement aufgebrachten Bedienkraft entgegengerichtet ist. Entsprechend erhält der Fahrer über das Bedienelement eine haptische Rückmeldung, welche im Wesentlichen von der Auslenkung des Bedienelements aus seiner Ausgangsstellung beziehungsweise Ruhestellung abhängig ist.

Zur Bereitstellung einer Rückfallebene bei einem Defekt des Bremssystems, beispielsweise bei einem Ausfall der Bremsdruckquelle, liegt vorzugsweise eine unmittelbare Strömungsverbindung zwischen dem Hauptbremszylinder und der ersten Radbremse und/oder der zweiten Radbremse vor. Auf diese Art und Weise kann auch bei einem Defekt des Bremssystems bei der Betätigung des Bedienelements an der ersten Radbremse und/oder der zweiten Radbremse ein Istbremsdruck aufgebaut werden. Hierzu muss der Fahrer jedoch eine wesentlich größere Bedienkraft auf das Bedienelement aufbringen als üblich.

Aus der Druckschrift WO 00/68053 ist ein Bremssystem bekannt, mit einem elektrohydraulischen Bremsmittel, das normalerweise in einer elektrischen Bremsbetriebsart arbeitet. Dabei wird der Hydraulikdruck an der Bremseinrichtung an den Fahrzeugrädern proportional zu der Bremsanforderung des Fahrers angelegt, die elektronisch an einem Bremspedal erfasst wird. Sollte die elektrische Bremsbetriebsart ausfallen, arbeitet das Bremssystem in einer Durchdrückbetriebsart, in der der Hydraulikdruck an die Bremseinrichtung der Fahrzeugvorderräder mittels eines mechanisch an das Bremspedal gekoppelten Hauptbremszylinders angelegt wird. Das Bremssystem weist ein elektrisches Parkbremsmittel auf, das es der Bremseinrichtung ermöglicht zu Parkbremszwecken betätigt zu werden. Dabei wird zum Ergänzen des Durchdrückbremsens, das durch das elektrohydraulische Bremsmittel in dem Fall bereitgestellt wird, dass die elektrische Bremsbetriebsart ausgefallen ist, durch die Betätigung des Fußpedals durch den Fahrer auch ein Betrieb des elektrischen Parkbremsens bewirkt.

Weiterhin ist aus der Druckschrift DE 10 2016 215 892 A1 ein Fahrzeugbremssystem mit Vorder- und Hinterradbremsen bekannt, wobei jede Radbremse einen Bremssattel umfasst, dem ein Rotor zugeordnet ist. Ein Hauptzylinder wird durch ein Bremspedal aktiviert, mit dem die Radbremsen verbunden sind. Eine elektrisch steuerbare Druckerzeugungsvorrichtung stellt einen Bremssystemdruck bereit. Eine Vielzahl von Ventilen ist zwischen den Bremssätteln und dem Hauptzylinder fluidisch gekoppelt. Eine Steuerungseinheit weist eine Prozessorschaltung auf, um zu bestimmen, ob das Fahrzeug unter einer Bedingung in Betrieb ist, unter der Bremsgeräusche auftreten können, und, wenn dem so ist, dann steuert die Steuerungseinheit die Druckerzeugungsvorrichtung und bestimmte der Ventile, um Bremssatteldruck wahlweise zu steuern, indem bestimmten der Bremssättel Druck zugeführt oder Druck in diesen entlastet wird, um das Bremsgeräusch bei gleichzeitigem Sicherstellen von angemessenem Bremsen des Fahrzeugs zu reduzieren.

Es ist Aufgabe der Erfindung, ein Bremssystem für ein Kraftfahrzeug vorzuschlagen, welches gegenüber bekannten Bremssystemen Vorteile aufweist, insbesondere auch im Fehlerfall einen sicheren Betrieb des Bremssystems, insbesondere ein "fail operational"-Verhalten ermöglicht.

Dies wird erfindungsgemäß mit einem Bremssystem mit den Merkmalen des Anspruchs 1 erreicht. Dabei ist vorgesehen, dass das Schaltventil als 3/2-Wegeventil ausgebildet ist und einen an den Fluidausgang des zweiten Einlassventils angeschlossenen Fluideingang, einen an die erste Radbremse angeschlossenen ersten Fluidausgang und einen an die zweite Radbremse angeschlossenen zweiten Fluidausgang aufweist.

Grundsätzlich ist ein Schaltventil vorgesehen, das einen Fluidausgang des zweiten Einlassventils in einer ersten Schaltstellung mit der zweiten Radbremse und in einer zweiten Schaltstellung mit der ersten Radbremse strömungstechnisch verbindet.

Das Schaltventil ist insoweit strömungstechnisch zwischen dem zweiten Einlassventil einerseits und sowohl der ersten Radbremse als auch der zweiten Radbremse andererseits angeordnet. Bevorzugt ist die erste Radbremse permanent mit einem Fluidausgang des ersten Einlassventils strömungsverbunden, wohingegen die Strömungsverbindung zwischen dem Fluidausgang des zweiten Einlassventils und der ersten Radbremse lediglich in der zweiten Schaltstellung, nicht jedoch in der ersten Schaltstellung des Schaltventils vorliegt.

Es ist durch Anordnung des Schaltventils in der zweiten Schaltstellung möglich, die erste Radbremse mittels des zweiten Einlassventils und - optional - mittels eines zweiten Auslassventils anzusteuern. Bei einem Defekt des ersten Einlassventils und/oder eines ersten Auslassventils kann insoweit die Ansteuerung der ersten Radbremse vollständig mittels des zweiten Einlassventils und/oder des zweiten Auslassventils vorgenommen werden. Dies ist insbesondere sinnvoll, falls die erste Radbremse einem Vorderrad des Kraftfahrzeugs und die zweite Radbremse einem Hinterrad des Kraftfahrzeugs zugeordnet ist. Zum einen ist es in diesem Fall sinnvoll, bei einem Bremsvorgang des Kraftfahrzeugs auf das Vorderrad eine größere Bremskraft beziehungsweise ein größeres Bremsmoment aufzuprägen als auf das Hinterrad. Zudem ist an dem Hinterrad üblicherweise eine Parkbremse vorgesehen, mittels welcher auch bei einer Entkopplung der zweiten Radbremse von der Bremsdruckquelle eine Bremskraft beziehungsweise ein Bremsmoment auf das Hinterrad aufgeprägt werden kann.

Es kann vorgesehen sein, dass in der ersten Schaltstellung des Schaltventils die erste Radbremse an den Fluidausgang des ersten Einlassventils angeschlossen ist und von dem Fluidausgang des zweiten Einlassventils entkoppelt ist. Umgekehrt ist die zweite Radbremse in der ersten Schaltstellung des Schaltventils mit dem Fluidausgang des zweiten Einlassventils strömungsverbunden und von dem Fluidausgang des ersten Einlassventils entkoppelt. In der zweiten Schaltstellung kann es nun vorgesehen sein, dass der Fluidausgang des zweiten Einlassventils sowohl mit der ersten Radbremse als auch mit der zweiten Radbremse in Strömungsverbindung steht. Besonders bevorzugt ist jedoch der Fluidausgang des zweiten Einlassventils in der zweiten Schaltstellung von der zweiten Radbremse entkoppelt und mit der ersten Radbremse strömungsverbunden.

Zudem kann es vorgesehen sein, dass die erste Radbremse in der ersten Schaltstellung des Schaltventils mit dem Fluidausgang des ersten Einlassventils strömungsverbunden ist und in der zweiten Schaltstellung von ihm strömungstechnisch entkoppelt ist. Es kann jedoch auch vorgesehen sein, dass die erste Radbremse auch in der zweiten Schaltstellung des Schaltventils mit dem Fluidausgang des ersten Einlassventils strömungstechnisch verbunden ist.

Im Rahmen einer weiteren Ausgestaltung der Erfindung kann vorgesehen sein, dass in der ersten Schaltstellung der Fluidausgang des zweiten Einlassventils von der ersten Radbremse strömungstechnisch getrennt ist. Hierauf wurde vorstehend bereits hingewiesen. In der ersten Schaltstellung ist insoweit der Fluidausgang des zweiten Einlassventils nur mit der zweiten Radbremse, nicht jedoch mit der ersten Radbremse verbunden. Das bedeutet, dass in der ersten Schaltstellung der Fluidausgang des ersten Einlassventils von dem Fluidausgang des zweiten Einlassventils ebenfalls strömungstechnisch entkoppelt ist.

Eine Weiterbildung der Erfindung sieht vor, dass in der zweiten Schaltstellung der Fluidausgang des zweiten Einlassventils von der zweiten Radbremse strömungstechnisch getrennt ist. Auch hierauf wurde vorstehend bereits hingewiesen. Während es selbstverständlich vorgesehen sein kann, dass auch in der zweiten Schaltstellung der Fluidausgang des zweiten Einlassventils mit der zweiten Radbremse strömungsverbunden ist, sodass also in der zweiten Schaltstellung der Fluidausgang des zweiten Einlassventils sowohl mit der ersten Radbremse als auch mit der zweiten Radbremse verbunden ist, ist bevorzugt mittels des zweiten Einlassventils lediglich eine der Radbremsen, nämlich die erste Radbremse, ansteuerbar. Auf diese Art und Weise wird eine bessere Kontrollierbarkeit der Bremskraft beziehungsweise des Bremsmoments erzielt.

Eine bevorzugte weitere Ausgestaltung der Erfindung sieht vor, dass die erste Radbremse permanent mit einem Fluidausgang des ersten Einlassventils strömungstechnisch verbunden ist. Die Strömungsverbindung zwischen der ersten Radbremse und dem Fluidausgang des ersten Einlassventils liegt insoweit unabhängig von der Schaltstellung des Schaltventils vor und entsprechend sowohl in der ersten Schaltstellung als auch in der zweiten Schaltstellung. Besonders bevorzugt ist jedoch eine Ausgestaltung, bei welcher die erste Radbremse in der zweiten Schaltstellung des Schaltventils von dem Fluidausgang des ersten Einlassventils strömungstechnisch entkoppelt ist.

Die Erfindung sieht vor, dass das Schaltventil als 3/2-Wegeventil ausgebildet ist und einen an den Fluidausgang des zweiten Einlassventils angeschlossenen Fluideingang, einen an die erste Radbremse angeschlossenen ersten Fluidausgang und einen an die zweite Radbremse angeschlossenen zweiten Fluidausgang aufweist. Das Schaltventil weist insoweit den einen Fluideingang sowie zwei Fluidausgänge, nämlich den ersten Fluidausgang und den zweiten Fluidausgang, auf. Entsprechend seiner Ausgestaltung als 3/2-Wegeventil ermöglicht es zwei Schaltstellungen, nämlich die erste Schaltstellung und die zweite Schaltstellung. In der ersten Schaltstellung ist der Fluideingang mit dem zweiten Fluidausgang verbunden und von dem ersten Fluidausgang strömungstechnisch entkoppelt. In der zweiten Schaltstellung ist hingegen der Fluideingang mit dem ersten Fluidausgang strömungstechnisch verbunden und von dem zweiten Fluidausgang strömungstechnisch entkoppelt.

Schließlich kann im Rahmen einer weiteren bevorzugten Ausgestaltung der Erfindung vorgesehen sein, dass die zweite Radbremse eine integrierte Parkbremse aufweist Unter der integrieren Parkbremse ist eine Parkbremse zu verstehen, welche an derselben Bremsbacke angreift wie die Hydraulikeinrichtung der Parkbremse.

Weiterhin kann es vorgesehen sein, dass eine erste Steuerschaltung und eine unabhängig von der ersten Steuerschaltung betreibbare zweite Steuerschaltung vorgesehen ist, wobei an die erste Steuerschaltung das erste Einlassventil und/oder das erste Auslassventil und an die zweite Steuerschaltung das zweite Einlassventil und/oder das zweite Auslassventil angeschlossen sind.

Die beiden Steuerschaltungen, also die erste Steuerschaltung und die zweite Steuerschaltung, sind grundsätzlich separat voneinander betreibbar, also völlig unabhängig voneinander aufgebaut. Bevorzugt werden die beiden Steuerschaltungen getrennt voneinander mit elektrischem Strom versorgt, sodass insoweit eine separate Stromversorgung der beiden Steuerschaltungen realisiert ist. Dabei kann es besonders bevorzugt vorgesehen sein, dass die beiden Steuerschaltungen an unterschiedliche Stromkreise eines Bordnetzes des Kraftfahrzeugs angeschlossen sind, sodass auch bei dem Ausfall eines der Stromkreise eine der Steuerschaltungen außer Funktion ist, die jeweils andere jedoch funktionsfähig ist.

Die beiden Steuerschaltungen können grundsätzlich demselben Steuergerät zugeordnet sein und entsprechend in einem gemeinsamen Steuergerätegehäuse vorliegen. Alternativ ist es selbstverständlich möglich, die beiden Steuerschaltungen separaten Steuergeräten zuzuordnen und entsprechend in unterschiedlichen Steuergerätegehäusen und mithin räumlich separiert anzuordnen. In letzterem Fall wird aufgrund der weitgehenden Trennung der Steuerschaltungen eine besonders hohe Ausfallsicherheit des Bremssystems realisiert.

Die Steuerschaltungen sind an unterschiedliche Ventile der beiden Radbremsen, also der wenigstens einen ersten Radbremse und der wenigstens einen zweiten Radbremse, angeschlossen. So ist es zunächst vorgesehen, dass die erste Steuerschaltung an das erste Einlassventil und/oder das erste Auslassventil angeschlossen ist und insoweit dem Betreiben des ersten Einlassventils und/oder des ersten Auslassventils dient. Die zweite Steuerschaltung ist dagegen an das zweite Einlassventil und/oder das zweite Auslassventil angeschlossen und dient insoweit dem Betreiben des zweiten Einlassventils und/oder des zweiten Auslassventils.

Durch die Aufteilung der Einlassventile und der Auslassventile auf die Steuerschaltungen wird eine hohe Redundanz erzielt, sodass auch bei dem Ausfall einer der Steuerschaltungen die Funktionsfähigkeit des Bremssystems in hohem Maße weiterhin gegeben ist. So ist insbesondere weiterhin eine Bremskraftverteilung zwischen der ersten Radbremse und der zweiten Radbremse möglich, nämlich insbesondere sofern der zweiten Radbremse die Parkbremse zugeordnet ist.

Bevorzugt ist es vorgesehen, dass die an eine der Steuerschaltungen angeschlossenen Ventile schaltungstechnisch von der jeweils anderen der Steuerschaltungen separiert sind. Anders ausgedrückt ist jedes der Ventile ausschließlich mittels einer der Steuerschaltungen ansteuerbar, also nicht mit der jeweils anderen. Diese Separierung der Ventile jeweils von einer der Steuerschaltungen ermöglicht den zuverlässigen Weiterbetrieb auch bei einem Defekt einer der Steuerschaltungen, welcher unter Umständen zur Störung der Ansteuerung der Ventile durch die jeweils andere (funktionsfähige) Steuerschaltung führen könnten. Es soll also vermieden werden, dass die Ansteuerung der Ventile mittels einer der Steuerschaltungen durch eine andere der Steuerschaltungen beeinträchtigt wird.

Die Erfindung betrifft weiterhin ein Verfahren zum Betreiben eines Bremssystems für ein Kraftfahrzeug gemäß den vorstehenden Ausführungen, wobei das Bremssystem wenigstens eine erste Radbremse und wenigstens eine zweite Radbremse aufweist, wobei ein erstes Einlassventil einerseits an die erste Radbremse sowie andererseits an eine Bremsdruckquelle und ein zweites Einlassventil einerseits an die zweite Radbremse und andererseits an die Bremsdruckquelle strömungstechnisch angeschlossen ist. Dabei ist vorgesehen, dass ein Schaltventil einen Fluidausgang des zweiten Einlassventils in einer ersten Schaltstellung mit der zweiten Radbremse und in einer zweiten Schaltstellung mit der ersten Radbremse strömungstechnisch verbindet. Dabei ist das Schaltventil als 3/2-Wegeventil ausgebildet und wiest einen an dem Fluidausgang des zweiten Einlassventils angeschlossenen Fluideingang, einen an die erste Radbremse angeschlossenen ersten Fluidausgang und einen an die zweite Radbremse angeschlossenen zweiten Fluidausgang auf. Das Schaltventil wird bei einem Defekt einer Ventileinrichtung der ersten Radbremse, bestehend aus dem ersten Einlassventil und einem ersten Auslassventil, von der ersten Schaltstellung in die zweite Schaltstellung umgeschaltet.

Auf die Vorteile einer derartigen Ausgestaltung des Bremssystems beziehungsweise einer derartigen Vorgehensweise wurde bereits hingewiesen. Sowohl das Bremssystem als auch das Verfahren zu seinem Betreiben können gemäß den vorstehenden Ausführungen weitergebildet sein, sodass insoweit auf diese hingewiesen wird.

Die Erfindung sieht vor, dass das Schaltventil bei einem Defekt einer Ventileinrichtung von der ersten Schaltstellung in die zweite Schaltstellung umgeschaltet wird. Bei der Ventileinrichtung handelt es sich um eine Ventileinrichtung der ersten Radbremse, wobei die Ventileinrichtung das erste Einlassventil und ein erstes Auslassventil umfasst. Sobald der Defekt eines dieser Ventile oder beider Ventile auftritt, kann die erste Radbremse nicht mehr vollständig angesteuert werden. Entsprechend ist es sinnvoll, das Ansteuern der ersten Radbremse nachfolgend mithilfe des zweiten Einlassventils und/oder des zweiten Auslassventils vorzunehmen. Selbstredend kann es vorgesehen sein, das Ansteuern der ersten Radbremse in der zweiten Schaltstellung mittels des ersten Einlassventils und entweder des ersten Auslassventils oder des zweiten Auslassventils oder alternativ beiden Auslassventilen, vorzunehmen.

Eine weitere Ausführungsform der Erfindung sieht vor, dass bei Vorliegen des Schaltventils in der zweiten Schaltstellung ein an der ersten Radbremse anliegender Bremsdruck mittels einer Bremsdruckquelle erzeugt wird. Die Bremsdruckquelle ist - wie bereits vorstehend erläutert - beispielsweise als Pumpe, vorzugsweise als elektrisch angetriebene beziehungsweise antreibbare Pumpe ausgestaltet. Besonders bevorzugt ist es vorgesehen, den an der ersten Radbremse anliegenden Bremsdruck sowohl in der ersten Schaltstellung als auch in der zweiten Schaltstellung mittels der Bremsdruckquelle zu erzeugen.

Schließlich kann es im Rahmen einer weiteren bevorzugten Ausgestaltung der Erfindung vorgesehen sein, dass bei Vorliegen des Schaltventils in der zweiten Schaltstellung ein von der zweiten Radbremse bewirktes Bremsmoment mittels einer in die zweite Radbremse integrierten Parkbremse erzeugt wird. Sofern sich das Schaltventil in der zweiten Schaltstellung befindet, so ist bevorzugt die zweite Radbremse von der Bremsdruckquelle entkoppelt, sodass an der zweiten Radbremse kein Bremsdruck mittels dieser aufgebaut werden kann. Entsprechend ist es notwendig, das Bremsmoment beziehungsweise die Bremskraft auf anderem Wege bereitzustellen. Hierzu wird die Parkbremse herangezogen, mittels welcher die zweite Radbremse zum Erzeugen des Bremsmoments angesteuert werden kann.

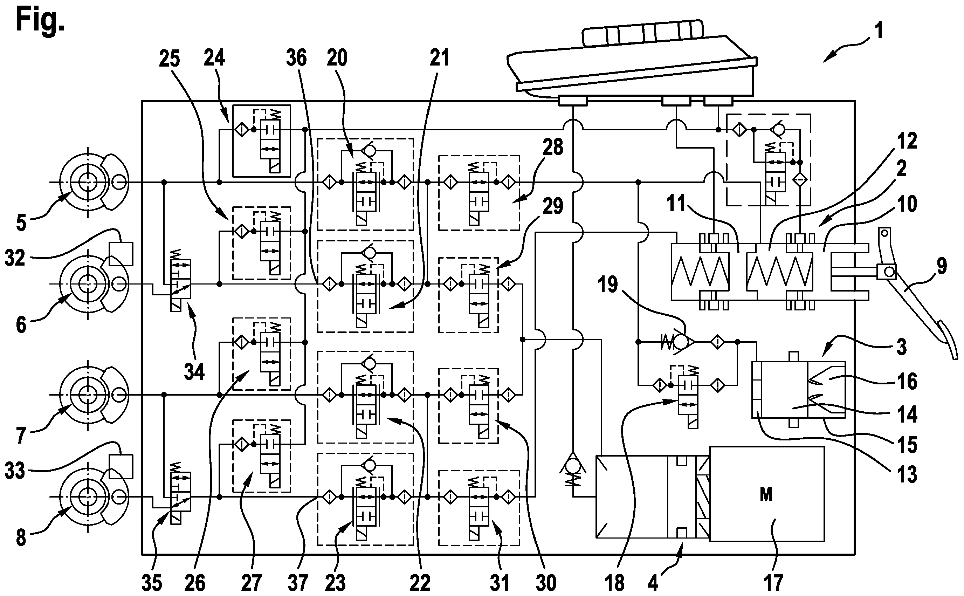

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung eines Bremssystems für ein Kraftfahrzeug.

Die Figur zeigt eine schematische Darstellung eines Bremssystems 1 für ein Kraftfahrzeug, welches einen Hauptbremszylinder 2, einen Bremskraftsimulator 3, eine Bremsdruckquelle 4 sowie Radbremsen 5, 6, 7 und 8 aufweist. Die Anzahl der Radbremsen ist selbstverständlich beliebig. In dem hier dargestellten Ausführungsbeispiel sind vier Radbremsen 5, 6, 7 und 8 vorgesehen. Es kann jedoch auch eine höhere oder niedrigere Anzahl an Radbremsen vorliegen. In dem dargestellten Ausführungsbeispiel sind die Radbremsen 5 und 7 Rädern einer ersten Radachse, insbesondere einer Vorderachse, und die Radbremsen 6 und 8 Rädern einer zweiten Radachse, insbesondere einer Hinterachse des Kraftfahrzeugs, zugeordnet.

Dem Hauptbremszylinder 2 ist ein Bedienelement 9 zugeordnet, dass hier als Bremspedal ausgeführt ist. Das Bedienelement 9 ist mit einem Hauptbremskolben 10 gekoppelt, beispielsweise über eine Hebelverbindung. Der Hauptbremskolben 10 ist verlagerbar in dem Hauptbremszylinder 2 angeordnet. In dem hier dargestellten Ausführungsbeispiel ist zusätzlich zu dem Hauptbremskolben 10 ein weiterer Bremskolben 11 in dem Hauptbremszylinder 2 angeordnet. Dieser ist jedoch optional.

Der Hauptbremskolben 10 schließt zusammen mit dem Hauptbremszylinder 2 ein Bremsfluidvolumen 12 ein. Dieses ist mit einem Simulatorfluidvolumen 13 des Bremskraftsimulators 3 strömungsverbunden. Das Simulatorfluidvolumen 13 wird von einem Simulatorkolben 14 gemeinsam mit einem Simulatorzylinder 15 begrenzt, in welchem der Simulatorkolben 14 verlagerbar angeordnet ist. Der Simulatorkolben 14 ist vorzugsweise mittels wenigstens eines Federelements 16 federkraftbeaufschlagt. Das Federelement 16 bewirkt eine Federkraft auf den Simulatorkolben 14, welche einer Vergrößerung des Simulatorfluidvolumens 13 entgegengerichtet ist.

Dem Hauptbremszylinder 2 und/oder dem Bedienelement 9 ist ein hier nicht dargestellter Sensor zugeordnet, mittels welchem bei einer Betätigung des Bedienelements 9 ein Sollbremsdruck ermittelt wird. Nachfolgend wird an der wenigstens einen Radbremse 5, 6, 7 und 8 ein mittels der Bremsdruckquelle 4 erzeugter Istbremsdruck angelegt, welcher dem Sollbremsdruck entspricht. Die Bremsdruckquelle 4 ist hier vorzugsweise als Pumpe ausgestaltet, welche mittels eines Elektromotors 17 angetrieben wird beziehungsweise antreibbar ist.

Strömungstechnisch zwischen dem Bremsfluidvolumen 12 und dem Simulatorfluidvolumen 13 ist ein Schaltventil 18 angeordnet. Strömungstechnisch parallel zu dem Schaltventil 18 ist ein Rückschlagventil 19 angeordnet. Das Rückschlagventil ist derart ausgestaltet, dass es in Richtung der Radbremse 5, 6, 7 beziehungsweise 8 öffnet, also eine Strömung aus dem Simulatorfluidvolumen 13 zulässt, eine Strömung in das Simulatorfluidvolumen 13 hinein jedoch unterbindet.

Den Radbremsen 5, 6, 7 und 8 sind Einlassventile 20, 21, 22 und 23 zugeordnet. Ebenso liegen Auslassventile 24, 25, 26 und 27 vor. Die Radbremsen 5 und 7 werden nachfolgend als erste Radbremsen 5 und 7 bezeichnet, analog hierzu liegen die Einlassventile 20 und 22 als erste Einlassventile und die Auslassventile 24 und 26 als erste Auslassventile vor. Die Radbremsen 6 und 8 sind als zweite Radbremsen ausgestaltet. Entsprechend werden die Einlassventile 21 und 23 als zweite Einlassventile und die Auslassventile 25 und 27 als zweite Auslassventile bezeichnet. Nachfolgend wird im Detail lediglich auf die erste Radbremse 5 und die zweite Radbremse 6 sowie die entsprechenden Ventile eingegangen. Die Ausführungen sind analog jedoch auf die Radbremsen 7 und 8 übertragbar.

Die Radbremsen 5 und 6 sind über ein Trennventil 28 an den Hauptbremszylinder 2 und über ein weiteres Trennventil 29 an die Bremsdruckquelle 4 angeschlossen. Anstelle der beiden Trennventile 28 und 29 können jedoch auch lediglich ein einziges Trennventil oder mehr als zwei Trennventile vorliegen. Von Bedeutung ist lediglich, dass die Radbremsen 5 und 6 über das Trennventil 28 und/oder das Trennventil 29 an die Bremsdruckquelle 4 beziehungsweise den Hauptbremszylinder 2 angeschlossen sind. Lediglich der Vollständigkeit halber sei darauf hingewiesen, dass den Radbremsen 7 und 8 ein Trennventil 30 sowie ein weiteres Trennventil 31 zugeordnet sind. Über das Trennventil 30 sind die Radbremsen 6, 7 und 8 an die Bremsdruckquelle 4 und über das weitere Trennventil 31 an den Hauptbremszylinder 2 strömungstechnisch angeschlossen.

Den Radbremsen 6 und 8 sind nun Parkbremsen 32 und 33 zugeordnet. Es ist erkennbar, dass den Radbremsen 5 und 6 einerseits sowie den Radbremsen 7 und 8 andererseits jeweils ein Schaltventil 34 beziehungsweise 35 zugeordnet ist. Die Schaltventile 34 und 35 verbinden einen Fluidausgang 36 beziehungsweise 37 in einer ersten Schaltstellung mit der zweiten Radbremse 6 beziehungsweise 7 und in einer zweiten Schaltstellung mit der ersten Radbremse 5 beziehungsweise 7. Mit einer derartigen Ausgestaltung des Bremssystems 1 kann bei einem Ausfall des Einlassventils 20 und/oder des Auslassventils 24 die Radbremse 5 mittels des Einlassventils 21 und/oder des Auslassventils 25 angesteuert werden.

Das bedeutet, dass die Radbremse 5 weiterhin mittels der Bremsdruckquelle 4 beziehungsweise mit von dieser bereitgestelltem Bremsdruck beaufschlagt werden kann. Die Bereitstellung einer Bremskraft beziehungsweise eines Bremsmoments an der Radbremse 6 ist weiterhin mittels der Parkbremse 32 möglich. Analog verhält es sich für die Radbremsen 7 und 8, wobei letzterer die Parkbremse 33 zugeordnet ist.

## Patentansprüche

1. Bremssystem (1) für ein Kraftfahrzeug, das wenigstens eine erste Radbremse (5,7) und wenigstens eine zweite Radbremse (6,8) aufweist, wobei ein erstes Einlassventil (20,22) einerseits an die erste Radbremse (5,7) sowie andererseits an eine Bremsdruckquelle (4) und ein zweites Einlassventil (21,23) einerseits an die zweite Radbremse (6,8) und andererseits an die Bremsdruckquelle (4) strömungstechnisch angeschlossen ist, mit einem Schaltventil (34,35), das einen Fluidausgang (36,37) des zweiten Einlassventils (21,23) in einer ersten Schaltstellung mit der zweiten Radbremse (6,8) und in einer zweiten Schaltstellung mit der ersten Radbremse (5,7) strömungstechnisch verbindet, **dadurch gekennzeichnet, dass** das Schaltventil (34,35) als 3/2-Wegeventil ausgebildet ist und einen an den Fluidausgang (36,37) des zweiten Einlassventils (21,23) angeschlossenen Fluideingang, einen an die erste Radbremse (5,7) angeschlossenen ersten Fluidausgang und einen an die zweite Radbremse (6,8) angeschlossenen zweiten Fluidausgang aufweist.

2. Bremssystem nach Anspruch 1, **dadurch gekennzeichnet, dass** in der ersten Schaltstellung der Fluidausgang (36,37) des zweiten Einlassventils (21,23) von der ersten Radbremse (5,7) strömungstechnisch getrennt ist.

3. Bremssystem nach einem der vorhergehenden Ansprüche, **dadurch gekennzeichnet, dass** in der zweiten Schaltstellung der Fluidausgang (36,37) des zweiten Einlassventils (21,23) von der zweiten Radbremse (6,8) strömungstechnisch getrennt ist.

4. Bremssystem nach einem der vorhergehenden Ansprüche, **dadurch gekennzeichnet, dass** die erste Radbremse (5,7) permanent mit einem Fluidausgang des ersten Einlassventils (20,22) strömungstechnisch verbunden ist.

5. Bremssystem nach einem der vorhergehenden Ansprüche, **dadurch gekennzeichnet, dass** die zweite Radbremse (6,8) eine integrierte Parkbremse (32,33) aufweist.

6. Verfahren zum Betreiben eines Bremssystems (1) für ein Kraftfahrzeug nach einem oder mehreren der vorhergehenden Ansprüche, wobei das Bremssystem (1) wenigstens eine erste Radbremse (5,7) und wenigstens eine zweite Radbremse (6,8) aufweist, wobei ein erstes Einlassventil (20,22) einerseits an die erste Radbremse (5,7) sowie andererseits an eine Bremsdruckquelle (4) und ein zweites Einlassventil (21,23) einerseits an die zweite Radbremse (6,8) und andererseits an die Bremsdruckquelle (4) strömungstechnisch angeschlossen ist, und wobei ein Schaltventil (34,35) einen Fluidausgang (36,37) des zweiten Einlassventils (21,23) in einer ersten Schaltstellung mit der zweiten Radbremse (6,8) und in einer zweiten Schaltstellung mit der ersten Radbremse (5,7) strömungstechnisch verbindet, **dadurch gekennzeichnet, dass** das Schaltventil (34,35) als 3/2-Wegeventil ausgebildet ist und einen an den Fluidausgang (36,37) des zweiten Einlassventils (21,23) angeschlossenen Fluideingang, einen an die erste Radbremse (5,7) angeschlossenen ersten Fluidausgang und einen an die zweite Radbremse (6,8) angeschlossenen zweiten Fluidausgang aufweist, wobei das Schaltventil (34,35) bei einem Defekt einer Ventileinrichtung der ersten Radbremse (5,7), bestehend aus dem ersten Einlassventil (20,22) und einem ersten Auslassventil (24,26), von der ersten Schaltstellung in die zweite Schaltstellung umgeschaltet wird.

7. Verfahren nach Anspruch 6, **dadurch gekennzeichnet, dass** bei Vorliegen des Schaltventils (34,35) in der zweiten Schaltstellung ein an der ersten Radbremse (5,7) anliegender Bremsdruck mittels einer Bremsdruckquelle (4) erzeugt wird.

8. Verfahren nach Anspruch 6 oder 7, **dadurch gekennzeichnet, dass** bei Vorliegen des Schaltventils (34,35) in der zweiten Schaltstellung ein von der zweiten Radbremse (6,8) bewirktes Bremsmoment mittels einer in die zweite Radbremse (6,8) integrierten Parkbremse (32,33) erzeugt wird.

## Claims

1. Brake system (1) for a motor vehicle, which has at least one first wheel brake (5, 7) and at least one second wheel brake (6, 8), wherein a first inlet valve (20, 22) is fluidically connected on the one side to the first wheel brake (5, 7) and on the other side to a source of braking pressure (4) and a second inlet valve (21, 23) is fluidically connected on the one side to the second wheel brake (6, 8) and on the other side to the source of braking pressure (4), having a switching valve (34, 35) which connects fluidically a fluid outlet (36, 37) of the second inlet valve (21, 23) in a first switching position with the second wheel brake (6, 8) and in a second switching position with the first wheel brake (5, 7), **characterised in that** the switching valve (34, 35) is formed as a 3/2 way valve and has a fluid inlet connected to the fluid outlet (36, 37) of the second inlet valve (21, 23), a first fluid outlet connected to the first wheel brake (5, 7) and a second fluid outlet connected to the second wheel brake (6, 8).

2. Brake system according to claim 1, **characterised in that** in the first switching position the fluid outlet (36, 37) of the second inlet valve (21, 23) is fluidically separated from the first wheel brake (5, 7).

3. Brake system according to any of the preceding claims, **characterised in that** the second switching position the fluid outlet (36, 37) of the second inlet valve (21, 23) is fluidically separated from the second wheel brake (6, 8).

4. Brake system according to any of the preceding claims, **characterised in that** the first wheel brake (5, 7) is fluidically permanently connected with a fluid outlet of the second inlet valve (20, 22).

5. Brake system according to any of the preceding claims, **characterised in that** the second wheel brake (6, 8) has an integrated parking brake (32, 33).

6. Method for operating a brake system (1) for a motor vehicle according to one or more of the preceding claims, wherein the brake system (1) has at least one first wheel brake (5, 7) and at least one second wheel brake (6, 8), wherein a first inlet valve (20, 22) is fluidically connected on one side to the first wheel brake (5, 7) and on the other side to a source of braking pressure (4) and a second inlet valve (21, 23) is connected on one side to the second wheel brake (6, 8) and on the other side to the source of braking pressure (4), and wherein a switching valve (34, 35) fluidically connects a fluid outlet (36, 37) of the second inlet valve (21, 23) in a first switching position with the second wheel brake (6, 8) and in a second switching position with the first wheel brake (5, 7), **characterised in that** the switching valve (34, 35) is formed as a 3/2 way valve and has a fluid inlet connected with the fluid outlet (36, 37) of the second inlet valve (21, 23), a first fluid outlet connected to the first wheel brake (5, 7) and a second fluid outlet connected to the second wheel brake (6, 8), wherein the switching valve (34, 35) in the case of the defect of a valve apparatus of the first wheel brake (5, 7), consisting of the first inlet valve (20, 22) and a first outlet valve (24, 26), is switched from the first switching position into the second switching position.

7. Method according to claim 6, **characterised in that** when the switching valve (34, 35) is positioned in the second switching position a braking pressure applied to the first wheel brake (5, 7) is generated by means of a source of braking pressure (4).

8. Method according to claim 6 or 7, **characterised in that** when the switching valve (34, 35) is positioned in the second switching position a braking moment produced by the second wheel brake (6, 8) is generated by means of a parking brake (32, 33) integrated into the second wheel brake (6, 8).

## Revendications

1. Système de freinage (1) pour un véhicule automobile, qui présente au moins un premier frein de roue (5, 7) et au moins un deuxième frein de roue (6, 8), dans lequel une première soupape d'admission (20, 22) est raccordée fluidiquement d'une part au premier frein de roue (5, 7) ainsi que d'autre part à une source de pression de freinage (4) et une deuxième soupape d'admission (21, 23) d'une part au deuxième frein de roue (6, 8) et d'autre part à la source de pression de freinage (4), avec une soupape de commutation (34, 35), qui relie fluidiquement une sortie de fluide (36, 37) de la deuxième soupape d'admission (21, 23) dans une première position de commutation au deuxième frein de roue (6, 8) et dans une deuxième position de commutation au premier frein de roue (5, 7), **caractérisé en ce que** la soupape de commutation (34, 35) est réalisée en tant que distributeur à 3/2 voies et présente une entrée de fluide raccordée à la sortie de fluide (36, 37) de la deuxième soupape d'admission (21, 23), une première sortie de fluide raccordée au premier frein de roue (5, 7) et une deuxième sortie de fluide raccordée au deuxième frein de roue (6, 8).

2. Système de freinage selon la revendication 1, **caractérisé en ce que,** dans la première position de commutation, la sortie de fluide (36, 37) de la deuxième soupape d'admission (21, 23) est séparée fluidiquement du premier frein de roue (5, 7).

3. Système de freinage selon l'une quelconque des revendications précédentes, **caractérisé en ce que,** dans la deuxième position de commutation, la sortie de fluide (36, 37) de la deuxième soupape d'admission (21, 23) est séparée fluidiquement du deuxième frein de roue (6, 8).

4. Système de freinage selon l'une quelconque des revendications précédentes, **caractérisé en ce que** le premier frein de roue (5, 7) est relié fluidiquement en permanence à une sortie de fluide de la première soupape d'admission (20, 22).

5. Système de freinage selon l'une quelconque des revendications précédentes, **caractérisé en ce que** le deuxième frein de roue (6, 8) présente un frein de stationnement (32, 33) intégré.

6. Procédé pour le fonctionnement d'un système de freinage (1) pour un véhicule automobile selon l'une ou plusieurs des revendications précédentes, dans lequel le système de freinage (1) présente au moins un premier frein de roue (5, 7) et au moins un deuxième frein de roue (6, 8), dans lequel une première soupape d'admission (20, 22) est raccordée fluidiquement d'une part au premier frein de roue (5, 7) ainsi que d'autre part à une source de pression de freinage (4) et une deuxième soupape d'admission (21, 23) d'une part au deuxième frein de roue (6, 8) et d'autre part à la source de pression de freinage (4), et dans lequel une soupape de commutation (34, 35) relie fluidiquement une sortie de fluide (36, 37) de la deuxième soupape d'admission (21, 23) dans une première position de commutation au deuxième frein de roue (6, 8) et dans une deuxième position de commutation au premier frein de roue (5, 7), **caractérisé en ce que** la soupape de commutation (34, 35) est réalisée en tant que distributeur à 3/2 voies et présente une entrée de fluide raccordée à la sortie de fluide (36, 37) de la deuxième soupape d'admission (21, 23), une première sortie de fluide raccordée au premier frein de roue (5, 7) et une deuxième sortie de fluide raccordée au deuxième frein de roue (6, 8), dans lequel la soupape de commutation (34, 35), en cas de défaut d'un ensemble de soupapes du premier frein de roue (5, 7), constitué de la première soupape d'admission (20, 22) et d'une première soupape d'échappement (24, 26), est commutée de la première position de commutation dans la deuxième position de commutation.

7. Procédé selon la revendication 6, **caractérisé en ce que,** lorsque la soupape de commutation (34, 35) se situe dans la deuxième position de commutation, une pression de freinage appliquée au premier frein de roue (5, 7) est produite au moyen d'une source de pression de freinage (4).

8. Procédé selon la revendication 6 ou 7, **caractérisé en ce que,** lorsque la soupape de commutation (34, 35) se situe dans la deuxième position de commutation, un couple de freinage provoqué par le deuxième frein de roue (6, 8) est produit au moyen d'un frein de stationnement (32, 33) intégré dans le deuxième frein de roue (6, 8).
